# EUROPEAN PATENT APPLICATION

(11) **EP 4 484 625 A1**
(43) Date of publication of application: **01.01.2025**
(21) Application number: 23869974.8
(22) Date of filing: 01.08.2023
(51) Int. Cl.: D01F 2/02, D01F 1/02, D01D 1/02, D01D 5/06, D01D 5/096, D01D 5/12, D01D 10/06

(54) **PREPARATION METHOD FOR CELLULOSE SPINNING SOLUTION, PRODUCT PREPARED THEREFROM, AND USE THEREOF**

(30) Priority: 26.09.2022 CN 202211174734
(71) Applicant: Xinxiang Chemical Fibre Co., Ltd., Xinxiang, Henan 453000 (CN)
(72) Inventor: XIE, Yueting, Xinxiang, Henan 453000 (CN); YANG, Junjie, Xinxiang, Henan 453000 (CN); SHAO, Changjin, Xinxiang, Henan 453000 (CN); YAO, Yongxin, Xinxiang, Henan 453000 (CN); GUO, Fanxiu, Xinxiang, Henan 453000 (CN); SU, Haixia, Xinxiang, Henan 453000 (CN); YAN, Guoxiang, Xinxiang, Henan 453000 (CN); ZHANG, Junheng, Xinxiang, Henan 453000 (CN); LI, Yibo, Xinxiang, Henan 453000 (CN)
(74) Representative: Gunzelmann, Rainer
(86) International application number: PCT/CN2023/110496
(87) International publication number: WO 2024/066728

(57) **Abstract**

A preparation method for a regenerated cellulose fiber, the preparation method specifically comprising: dissolving a cellulose raw material by using a cellulose solvent system to obtain a dissolved solution; adding a stabilizer into the dissolved solution, uniformly mixing, and filtering to obtain a cellulose spinning solution, wherein the stabilizer is a metal sulfate; defoaming and spinning the cellulose spinning solution to obtain a regenerated cellulose fiber. In the preparation method, the addition of the stabilizer can prevent cellulose macromolecules in the cellulose spinning solution from being excessively degraded, thus effectively protecting cellulose macromolecules in the spinning solution, improving the strength and toughness of the regenerated cellulose fiber prepared from the cellulose spinning solution, and the prepared regenerated cellulose fiber filament has high strength, good toughness and high quality.

## Description

The present application claims priority to Chinese Patent Application No. CN202211174734.2 filed to the China National Intellectual Property Administration (CNIPA) on September 26, 2022 and entitled "PREPARATION METHOD OF CELLULOSE SPINNING SOLUTION, AND PRODUCT PREPARED THEREFROM AND USE THEREOF", which is incorporated herein by reference in its entirety.

### TECHNICAL FIELD

The present disclosure belongs to the technical field of novel textile materials, and particularly relates to a preparation method of a regenerated cellulose fiber.

### BACKGROUND

Regenerated cellulose fiber is a high-quality fiber type favored by the public for unique touch and comfortable feel. The regenerated cellulose fiber is generally prepared from cotton pulp or wood pulp that is dissolved and spun through a traditional viscose process. Plant Juncao has the advantages of preventing wind and sand, resisting drought and waterlogging, storing water, and having strong resistance to adversity. Juncao has a much shorter growth cycle than that of trees and other forest resources. After being cut down and harvested, the Juncao continues to reproduce and grow from its root system. Therefore, the Juncao is a rare green and renewable resource in nature, and the Juncao industry shows huge storage capacity and rich resources so far. However, there is an extremely poor overall utilization rate of the Juncao, with only a small amount used in the edible and medicinal fungi industry, and high value-added applications are still to be developed. It is understood that Juncao is rich in cellulose and becomes an excellent substitute of cotton pulp and wood pulp in preparing regenerated cellulose fiber. Accordingly, it is a problem worth exploring, and a hot spot as well as a difficult point in the current research and development of the textile field to use the Juncao in the processing of regenerated cellulose fiber.

The traditional carbon disulfide viscose system uses carbon disulfide in making glue, which is prone to produce sulfur-containing toxic gas, accompanied by a large amount of energy consumption and pollution. A novel solvent system-based spinning meets the requirements of environmental protection, and has a particularly simple preparation and production process compared with that of other solvent systems. In the process of developing a novel solvent system to dissolve Juncao pulp to produce Juncao regenerated cellulose fiber, it is found that compared with the traditional carbon disulfide viscose system, the novel solvent system dissolves Juncao pulp in a higher speed. The cellulose in Juncao pulp can be dissolved in an extremely short time to obtain a cellulose spinning solution, while the rapider dissolution is conducive to shortening the preparation time of spinning solution and reducing energy consumption. However, the actual production shows that the novel solvent system has a strong ability to continuously act on cellulose macromolecules after the cellulose is dissolved. The residual novel solvent system in the cellulose spinning solution can further destroy the cellulose macromolecules in the spinning solution, resulting in molecular chain breakage of the cellulose macromolecule. Especially in the industrial production, the spinning solution needs to be pretreated by filtration, defoaming and other pretreatment operations before spinning. During the filtration and defoaming, continuous dissolution of the novel solvent system on cellulose macromolecules may cause the fiber macromolecules in the cellulose spinning solution to be destroyed, resulting in low strength and poor toughness of the regenerated cellulose fiber prepared by the spinning solution through the spinning. The continuous dissolution may even lead to the inability to form continuous fibers normally after spinning, thus seriously affecting use of the Juncao regenerated cellulose fiber. As a result, it becomes a key to preparing novel solvent method-based Juncao regenerated cellulose fiber to solve the above problems.

### SUMMARY

In view of the problems and shortcomings in the prior art, an objective of the present disclosure is to provide a preparation method of a regenerated cellulose fiber.

In order to achieve the above objective of the present disclosure, the present disclosure adopts the following technical solutions:

A first aspect of the present disclosure provides a preparation method of a cellulose spinning solution, including the following steps: dissolving a cellulose raw material with a cellulose solvent system to obtain a dissolving solution; adding a stabilizer into the dissolving solution, mixing evenly, and filtering to obtain the cellulose spinning solution; where the stabilizer is a metal sulfate; the cellulose solvent system includes a cellulose solvent, the cellulose solvent includes a solvent A and a solvent B, and the solvent A is selected from the group consisting of alkylammonium hydroxide and an alkylammonium hydroxide aqueous solution.

Preferably, the metal sulfate is at least one selected from the group consisting of ferric sulfate, ferrous sulfate, magnesium sulfate, and barium sulfate. More preferably, the metal sulfate is ferric sulfate.

Preferably, the cellulose spinning solution has 50 ppm to 3,000 ppm of the stabilizer. More preferably, the cellulose spinning solution has 100 ppm to 3,000 ppm of the stabilizer. Most preferably, the cellulose spinning solution has 1,000 ppm of the stabilizer.

Preferably, the solvent B is selected from the group consisting of an aprotic solvent and an aprotic solvent aqueous solution.

Preferably, the alkylammonium hydroxide is at least one selected from the group consisting of tetramethylammonium hydroxide (TMAH), tetraethylammonium hydroxide (TEAH), tetrapropylammonium hydroxide (TPAH), and tetrabutylammonium hydroxide (TBAH). More preferably, the alkylammonium hydroxide is the TBAH.

Preferably, the aprotic solvent is at least one selected from the group consisting of N,N-dimethylformamide (DMF), *N,N-*dimethylacetamide (DMA), *N,N-*dimethylpropionamide (DMP), *N,N-*dimethylbutanamide (DMB), *N,N*-dimethylhexanamide (DNM), dimethyl sulfoxide (DMSO), dibutyl sulfoxide (DBSO), urea, and thiourea. More preferably, the aprotic solvent is the DMSO.

Preferably, the cosolvent is at least one selected from the group consisting of aromatic polyoxyethylene ether, tetramethylammonium chloride (TMAC), tetraethylammonium chloride (TEAC), tetrapropylammonium chloride (TPAC), and tetrabutylammonium chloride (TBAC). More preferably, the cosolvent is the aromatic polyoxyethylene ether; most preferably, the cosolvent is a viscose additive HB-3803L.

Preferably, the cellulose raw material and the cellulose solvent are at a mass ratio of (1-20):(80-99). More preferably, the cellulose raw material and the cellulose solvent are at a mass ratio of 1:9.

Preferably, the cellulose solvent system further includes the cosolvent; the cosolvent is added at 0% to 5% of a total weight of the cellulose raw material and the cellulose solvent. More preferably, the cosolvent is added at 1% of a total weight of the cellulose raw material and the cellulose solvent.

Preferably, the cellulose solvent includes 10% to 100% by volume of the solvent A and 0% to 90% by volume of the solvent B. More preferably, the cellulose solvent includes 50% by volume of the solvent A and 50% by volume of the solvent B.

Preferably, the solvent A includes the alkylammonium hydroxide with a mass fraction of 30% to 70%; the solvent B is a DMSO aqueous solution, and the DMSO aqueous solution includes the DMSO with a mass fraction of 95%.

Preferably, the dissolving is conducted at 20°C to 40°C for 0.5 h to 2 h. More preferably, the dissolving is conducted at 30°C for 1 h.

Preferably, the cellulose raw material is at least one selected from the group consisting of a Juncao pulp, a cotton pulp, a wood pulp, and a bamboo pulp. More preferably, the cellulose raw material is the Juncao pulp.

A second aspect of the present disclosure provides a cellulose spinning solution product prepared by the preparation method of a cellulose spinning solution.

A third aspect of the present disclosure provides use of the cellulose spinning solution product in preparation of a regenerated cellulose fiber.

A fourth aspect of the present disclosure provides a preparation method of a regenerated cellulose fiber, including: subjecting the cellulose spinning solution product as a raw material to defoaming and spinning to obtain the regenerated cellulose fiber.

Preferably, the spinning includes: treating the cellulose spinning solution product in a coagulation bath to form an as-formed fiber, and then subjecting the as-formed fiber to drawing, oven drying, and oiling to obtain the regenerated cellulose fiber. Preferably, the preparation method of a regenerated cellulose fiber further includes after the spinning is completed: subjecting the regenerated cellulose fiber to winding directly to obtain a regenerated cellulose fiber filament, or to cutting, opening, and packaging to obtain a Juncao regenerated cellulose fiber staple; where a spinning device can be a conventional viscose filament or staple spinning device; preferably, the coagulation bath is a mixed aqueous solution of sulfuric acid and tetrabutylammonium sulfate (TBAS), in which the sulfuric acid has a concentration of 120 g/L±2 g/L and the TBAS has a concentration of 120 g/L; the coagulation bath is at 45°C.

A fifth aspect of the present disclosure provides a regenerated cellulose fiber product prepared by the preparation method of a regenerated cellulose fiber, where the regenerated cellulose fiber product is selected from the group consisting of a regenerated cellulose fiber filament and a regenerated cellulose fiber staple. Preferably, the regenerated cellulose fiber filament has a dry breaking strength of (1.3-2.02) cN/dtex, a dry elongation at break of 6% to 15%, and a fineness of 120 D; preferably, the regenerated cellulose fiber staple has a dry breaking strength of (1.5-2.2) cN/dtex, a dry elongation at break of 6% to 15%, and a fineness of 1.5 D.

Compared with the prior art, the present disclosure has the following beneficial effects:
(1) In the present disclosure, a cellulose solvent system is adopted to dissolve the cellulose raw material, and a stabilizer metal sulfate is added into the dissolving solution obtained after dissolution. The metal sulfate can reduce the activity of alkylammonium hydroxide in the solvent system, and effectively slow down the degradation of cellulose macromolecules by the cellulose solvent system. This process avoids excessive degradation of cellulose macromolecules in the cellulose spinning solution during defoaming and spinning, effectively protects the cellulose macromolecules in the spinning solution, and further improves the strength and toughness of the regenerated cellulose fiber prepared using the cellulose spinning solution. Meanwhile, the stabilizer can also greatly improve the stability of the prepared cellulose spinning solution, prolong the storage time of the cellulose spinning solution, and gain sufficient time for spinning production.
(2) In the present disclosure, the cellulose spinning solution is used for spinning, and an obtained regenerated cellulose fiber filament has high strength and desirable toughness, with a dry breaking strength of (1.3-2.02) cN/dtex and a dry elongation at break of 6% to 15%; an obtained regenerated cellulose fiber staple has high strength and desirable toughness, with a dry breaking strength of (1.5-2.2) cN/dtex and a dry elongation at break of 6% to 15%.
(3) In the present disclosure, the cellulose spinning solution is prepared using a Juncao pulp as the raw material. Juncao raw materials have the characteristics of wide planting area, extremely rich yield, and low price, and can effectively reduce the production cost of cellulose spinning solution and alleviate the problem of insufficient raw materials for existing cellulose fiber production. Moreover, through the high-value utilization of biomass Juncao, "replacing wood with Juncao" reduces the felling of forest trees and can further protect the ecological environment.

### DETAILED DESCRIPTION OF THE EMBODIMENTS

The present disclosure will be further illustrated below with reference to examples. It should be noted that, unless otherwise specified, all technical and scientific terms used in the present disclosure have the same meanings as in the technical field to which the present disclosure belongs. The experimental methods in the following examples without specifying specific conditions all adopt conventional techniques in the art or follow the conditions recommended by the manufacturers. All of the used reagents or instruments which are not specified with manufacturers are conventional commercially-available products.

To provide clearer understanding of the technical solutions of the present disclosure for those skilled in the art, the technical solutions in the present disclosure will be described in detail below in conjunction with specific examples.

### Example 1: Discussion on stabilizer types:

In order to explore an influence of the stabilizer types on a spinning performance of the prepared cellulose solution, Examples 1-1 to 1-5 were conducted in the present disclosure.

### Example 1-1:

A preparation method of a cellulose spinning solution included the following steps:
(1) A cellulose raw material, a cellulose solvent, and a cosolvent were added into a dissolving device, dissolved by stirring at 30°C for 1 h to obtain a dissolving solution. The cellulose raw material and the cellulose solvent were at a mass ratio of 1:9; the cosolvent was added at 1% of a total weight of the cellulose raw material and the cellulose solvent. The cellulose raw material was a Juncao pulp, which was prepared by using Juncao as a raw material through a pulping process. The cellulose solvent includes a solvent A and a solvent B at a volume ratio of 1:1; the solvent A was a TBAH aqueous solution, in which TBAH had a mass fraction of 55%; the solvent B was a DMSO aqueous solution, in which DMSO had a mass fraction of 95%. The cosolvent was a viscose additive HB-3803L (purchased from Shenyang Hoper Group Co., Ltd.).
(2) A stabilizer was added into the dissolving solution prepared in step (1), mixed by stirring for 1 h, filtered to remove undissolved impurities and some large cellulose particles to obtain a cellulose spinning solution; where the cellulose spinning solution included 500 ppm of the stabilizer, which was ferric sulfate.

### Example 1-2:

Example 1-2 was substantially the same as Example 1-1, except that the stabilizer in step (2) was ferrous sulfate.

### Example 1-3:

Example 1-3 was substantially the same as Example 1-1, except that the stabilizer in step (2) was magnesium sulfate.

### Example 1-4:

Example 1-4 was substantially the same as Example 1-1, except that the stabilizer in step (2) was barium sulfate.

### Example 1-5:

Example 1-5 was substantially the same as Example 1-1, except that no stabilizer in step (2) was added.

Step (2) specifically included: the dissolving solution prepared in step (1) was continuously mixed by stirring for 1 h, and filtered to obtain the cellulose spinning solution.

In order to compare the influences of different stabilizer types on the spinning performance of the prepared cellulose solution, the cellulose spinning solutions prepared in Example 1-1 to Example 1-5 were used as a raw material for spinning to prepare regenerated cellulose fiber filaments, and the performance indexes of the prepared fiber filaments were tested. The test results were shown in Table 1.

A preparation method of the regenerated cellulose fiber filament included: the cellulose spinning solution was subjected to vacuum defoaming for 10 h to remove air bubbles in the cellulose spinning solution, spinning using a spinning device (spinning speed at 110 m/min), the cellulose spinning solution was then treated in a coagulation bath (the coagulation bath was a mixed aqueous solution of sulfuric acid and TBAS, the sulfuric acid had a concentration of (120±2) g/L and the TBAS had a concentration of 120 g/L in the coagulation bath; the coagulation bath was at 45°C) to form an as-formed fiber, which was subjected to drawing, oven drying, and oiling to obtain a regenerated cellulose fiber, which was then directly wound to obtain a Juncao regenerated cellulose fiber filament (where product specifications of the Juncao regenerated cellulose fiber filament were: 120D/30F).

**Table 1 Influences of stabilizer types on performances of prepared regenerated cellulose fiber filament**

| Example | Stabilizer type | Regenerated cellulose fiber filament | | |
|---|---|---|---|---|
| | | Dry breaking strength (cN/dtex) | Dry elongation at break (%) | Fineness (D) |
| Example 1-1 | Ferric sulfate | 1.9 | 14.4 | 120 |
| Example 1-2 | Ferrous sulfate | 1.75 | 10.9 | 120 |
| Example 1-3 | Magnesium sulfate | 1.65 | 8.8 | 120 |
| Example 1-4 | Barium sulfate | 1.71 | 10.3 | 120 |
| Example 1-5 | \ | 0.9 | 6.7 | 120 |

As shown in Table 1, when the spinning solution without stabilizer was used for spinning, the prepared fiber filament had low strength and poor toughness. The strength and toughness of the fiber filament prepared by spinning the spinning solution with stabilizer were significantly improved. A strengthening effect was particularly prominent when ferric sulfate was used as a stabilizer, and the dry breaking strength and dry elongation at break of the prepared fiber filament were increased by not less than 1 times.

### Example 2: Discussion on stabilizer dosages:

In order to explore an influence of the stabilizer dosage on a spinning performance of the prepared cellulose solution, Examples 2-1 to 2-6 were conducted in the present disclosure.

### Example 2-1:

A preparation method of a cellulose spinning solution included the following steps:
(1) A cellulose raw material, a cellulose solvent, and a cosolvent were added into a dissolving device, dissolved by stirring at 30°C for 1 h to obtain a dissolving solution. The cellulose raw material and the cellulose solvent were at a mass ratio of 1:9; the cosolvent was added at 1% of a total weight of the cellulose raw material and the cellulose solvent. The cellulose raw material was a Juncao pulp, which was prepared by using Juncao as a raw material through a pulping process. The cellulose solvent includes a solvent A and a solvent B at a volume ratio of 1:1; the solvent A was a TBAH aqueous solution, in which TBAH had a mass fraction of 55%; the solvent B was a DMSO aqueous solution, in which DMSO had a mass fraction of 95%. The cosolvent was a viscose additive HB-3803L (purchased from Shenyang Hoper Group Co., Ltd.).
(2) A stabilizer was added into the dissolving solution prepared in step (1), mixed by stirring for 1 h, filtered to remove undissolved impurities and some large cellulose particles to obtain a cellulose spinning solution; where the cellulose spinning solution included 50 ppm of the stabilizer, which was ferric sulfate.

### Example 2-2:

Example 2-2 was substantially the same as Example 2-1, except that the stabilizer in the cellulose spinning solution in step (2) was added at 100 ppm.

### Example 2-3:

Example 2-3 was substantially the same as Example 2-1, except that the stabilizer in the cellulose spinning solution in step (2) was added at 1,000 ppm.

### Example 2-4:

Example 2-4 was substantially the same as Example 2-1, except that the stabilizer in the cellulose spinning solution in step (2) was added at 1,500 ppm.

### Example 2-5:

Example 2-5 was substantially the same as Example 2-1, except that the stabilizer in the cellulose spinning solution in step (2) was added at 2,000 ppm.

### Examples 2-6:

Example 2-6 was substantially the same as Example 2-1, except that the stabilizer in the cellulose spinning solution in step (2) was added at 3,000 ppm.

In order to compare the influences of different stabilizer dosage on the spinning performance of the prepared cellulose solution, the cellulose spinning solutions prepared in Example 2-1 Example 2-6 were used as a raw material for spinning to prepare regenerated cellulose fiber filaments (a preparation method of the regenerated cellulose fiber filaments was the same as that in Example 1), and the performance indexes of the prepared fiber filaments were tested. The test results were shown in Table 2.

**Table 2 Influences of stabilizer dosage on performances of prepared regenerated cellulose fiber filament**

| Example | Stabilizer type | Stabilizer dosage (ppm) | Regenerated cellulose fiber filament | | |
|---|---|---|---|---|---|
| | | | Dry breaking strength (cN/dtex) | Dry elongation at break (%) | Fineness (D) |
| Example 2-1 | Ferric sulfate | 50 | 1.1 | 7.1 | 120 |
| Example 2-2 | Ferric sulfate | 100 | 1.61 | 8.3 | 120 |
| Example 1-1 | Ferric sulfate | 500 | 1.9 | 14.4 | 120 |
| Example 2-3 | Ferric sulfate | 1000 | 2.02 | 15.1 | 120 |
| Example 2-4 | Ferric sulfate | 1500 | 1.72 | 11.3 | 120 |
| Example 2-5 | Ferric sulfate | 2000 | 1.68 | 10.6 | 120 |
| Examples 2-6 | Ferric sulfate | 3000 | 1.58 | 7.8 | 120 |

As shown in Table 2, adding the stabilizer ferric sulfate to the spinning solution was beneficial to improving the spinning strength and toughness, and the dosage of ferric sulfate was highly important. When the dosage of ferric sulfate was 50 ppm, the strength and toughness of the prepared regenerated cellulose fiber filaments were extremely slightly improved. With an increase of the dosage of ferric sulfate, the dry breaking strength and dry elongation at break of the regenerated cellulose fiber filaments were significantly improved. When the dosage of ferric sulfate was 1,000 ppm, the dry breaking strength and dry elongation at break of the regenerated cellulose fiber filaments reached the maximum, which were 2.02 cN/dtex and 15.1%, respectively. Therefore, the prepared regenerated cellulose filaments had high strength and toughness. When the dosage of ferric sulfate was further increased, the dry breaking strength and dry elongation at break of the regenerated cellulose fiber filaments gradually decreased. Accordingly, the stabilizer ferric sulfate was added at preferably 1,000 ppm.

In order to further study the influence of the stabilizer ferric sulfate on the performances of the prepared regenerated cellulose fiber staples, the cellulose spinning solutions prepared in Example 1-1, Example 1-5, and Example 2-3 were used as a raw material for spinning. The cellulose spinning solution was spun on a staple spinning machine, and then formed into an as-formed fiber through a coagulation bath (the coagulation bath was a mixed aqueous solution of sulfuric acid and TBAS, of which the sulfuric acid had a concentration of (120±2) g/L and the TBAS had a concentration of 120 g/L; the coagulation bath was at 45°C), and then drawn, water-washed, oiled, dehydrated, oven-dried, cut, opened, and packaged to form a Juncao regenerated cellulose fiber staple (product specifications: 1.5D×38mm). The performance indexes of the prepared regenerated cellulose fiber staple were tested, and the test results were shown in Table 3.

**Table 3 Influences of stabilizer on performances of prepared regenerated cellulose fiber staple**

| Example | Stabilizer type | Stabilizer dosage (ppm) | Regenerated cellulose fiber filament | | |
|---|---|---|---|---|---|
| | | | Dry breaking strength (cN/dtex) | Dry elongation at break (%) | Fineness (D) |
| Example 1-1 | Ferric sulfate | 500 | 2.0 | 14.6 | 1.5 |
| Example 1-5 | \ | | 1.1 | 8.4 | 1.5 |
| Example 2-3 | Ferric sulfate | 1000 | 2.2 | 15.0 | 1.5 |

As shown in Table 3, when the spinning solution without stabilizer was used for spinning, the prepared fiber staple had low strength and poor toughness. The strength and toughness of the fiber filament prepared by spinning the spinning solution with stabilizer ferric sulfate were significantly improved. Moreover, when the dosage of ferric sulfate was 1,000 ppm, the dry breaking strength and dry elongation at break of the regenerated cellulose fiber staple reached the maximum, which were 2.2 cN/dtex and 15.0%, respectively. Therefore, the prepared regenerated cellulose had high strength and toughness.

### Example 3:

Example 3 was substantially the same as Example 1-1, except that the cellulose raw material was a mixture of Juncao pulp and cotton pulp at a mass ratio of 1:1, where the Juncao pulp was prepared by using Juncao as a raw material through a pulping process.

The cellulose spinning solution prepared in Example 3 was used as a raw material for spinning to prepare a regenerated cellulose fiber filament (a preparation method of the regenerated cellulose fiber filament was the same as that in Example 1), with a dry breaking strength of 1.95 cN/dtex, a dry elongation at break of 14.8%, and a fineness of 120 D.

### Example 4:

Example 4 was substantially the same as Example 1-1, except that the cellulose raw material was a mixture of Juncao pulp and wood pulp at a mass ratio of 1:1, where the Juncao pulp was prepared by using Juncao as a raw material through a pulping process.

### Example 5:

Example 5 was substantially the same as Example 1-1, except that the cellulose raw material was a mixture of Juncao pulp and bamboo pulp at a mass ratio of 1:1, where the Juncao pulp was prepared by using Juncao as a raw material through a pulping process.

### Example 6:

Example 6 was substantially the same as Example 1-1, except that the cellulose raw material and the cellulose solvent were at a mass ratio of 5:95.

The cellulose spinning solution prepared in Example 6 was used as a raw material for spinning to prepare a regenerated cellulose fiber filament (a preparation method of the regenerated cellulose fiber filament was the same as that in Example 1), with a dry breaking strength of 1.65 cN/dtex, a dry elongation at break of 8.4%, and a fineness of 120 D.

### Example 7:

Example 7 was substantially the same as Example 1-1, except that the cellulose solvent included a solvent A and a solvent B at a volume ratio of 7:3.

The cellulose spinning solution prepared in Example 7 was used as a raw material for spinning to prepare a regenerated cellulose fiber filament (a preparation method of the regenerated cellulose fiber filament was the same as that in Example 1), with a dry breaking strength of 1.71 cN/dtex, a dry elongation at break of 9.2%, and a fineness of 120 D.

The above examples are specific implementations of the present disclosure, but the implementation of the present disclosure is not limited by the above examples. Any other combinations, changes, modifications, substitutions, and simplifications that do not exceed the design idea of the present disclosure shall fall within the protection scope of the present disclosure.

## Claims

1. A preparation method of a cellulose spinning solution, comprising the following steps: dissolving a cellulose raw material with a cellulose solvent system to obtain a dissolving solution; adding a stabilizer into the dissolving solution, mixing evenly, and filtering to obtain the cellulose spinning solution; wherein the stabilizer is a metal sulfate; the cellulose solvent system comprises a cellulose solvent, the cellulose solvent comprises a solvent A and a solvent B, and the solvent A is selected from the group consisting of alkylammonium hydroxide and an alkylammonium hydroxide aqueous solution.

2. The preparation method of a cellulose spinning solution according to claim 1, wherein the metal sulfate is at least one selected from the group consisting of ferric sulfate, ferrous sulfate, magnesium sulfate, and barium sulfate.

3. The preparation method of a cellulose spinning solution according to claim 1 or 2, wherein the cellulose spinning solution has 50 ppm to 3,000 ppm of the stabilizer.

4. The preparation method of a cellulose spinning solution according to claim 1, wherein the solvent B is selected from the group consisting of an aprotic solvent and an aprotic solvent aqueous solution.

5. The preparation method of a cellulose spinning solution according to claim 4, wherein the alkylammonium hydroxide is at least one selected from the group consisting of tetramethylammonium hydroxide (TMAH), tetraethylammonium hydroxide (TEAH), tetrapropylammonium hydroxide (TPAH), and tetrabutylammonium hydroxide (TBAH); the aprotic solvent is at least one selected from the group consisting of N,N-dimethylformamide (DMF), *N,N*-dimethylacetamide (DMA), *N,N*-dimethylpropionamide (DMP), *N,N-*dimethylbutanamide (DMB), *N,N*-dimethylhexanamide (DNM), dimethyl sulfoxide (DMSO), dibutyl sulfoxide (DBSO), urea, and thiourea; and the cosolvent is at least one selected from the group consisting of aromatic polyoxyethylene ether, tetramethylammonium chloride (TMAC), tetraethylammonium chloride (TEAC), tetrapropylammonium chloride (TPAC), and tetrabutylammonium chloride (TBAC).

6. The preparation method of a cellulose spinning solution according to claim 1, wherein the cellulose raw material is at least one selected from the group consisting of a Juncao pulp, a cotton pulp, a wood pulp, and a bamboo pulp.

7. The preparation method of a cellulose spinning solution according to claim 4, 5, or 6, wherein the cellulose raw material and the cellulose solvent are at a mass ratio of (1 -20):(80-99); the cellulose solvent system further comprises the cosolvent; the cosolvent is added at 0% to 5% of a total weight of the cellulose raw material and the cellulose solvent; and the cellulose solvent comprises 10% to 100% by volume of the solvent A and 0% to 90% by volume of the solvent B.

8. The preparation method of a cellulose spinning solution according to claim 1, wherein the dissolving is conducted at 20°C to 40°C for 0.5 h to 2 h.

9. A cellulose spinning solution product prepared by the preparation method of a cellulose spinning solution according to any one of claims 1 to 8.

10. Use of the cellulose spinning solution product according to claim 9 in preparation of a regenerated cellulose fiber.

11. A preparation method of a regenerated cellulose fiber, comprising: subjecting the cellulose spinning solution product according to claim 9 as a raw material to defoaming and spinning to obtain the regenerated cellulose fiber.

12. The preparation method of a regenerated cellulose fiber according to claim 11, wherein the spinning comprises: treating the cellulose spinning solution product in a coagulation bath to form an as-formed fiber, and then subjecting the as-formed fiber to drawing, oven drying, and oiling to obtain the regenerated cellulose fiber.

13. The preparation method of a regenerated cellulose fiber according to claim 11 or 12, further comprising after the spinning is completed: subjecting the regenerated cellulose fiber to winding directly to obtain a regenerated cellulose fiber filament, or to cutting, opening, and packaging to obtain a Juncao regenerated cellulose fiber staple.

14. A regenerated cellulose fiber product prepared by the preparation method of a regenerated cellulose fiber according to any one of claims 11 to 13.

15. The regenerated cellulose fiber product according to claim 14, wherein the regenerated cellulose fiber product is selected from the group consisting of a regenerated cellulose fiber filament and a regenerated cellulose fiber staple.
